# EUROPÄISCHE PATENTSCHRIFT

(11) **EP 1 183 854 B1**
(45) Veröffentlichungstag und Bekanntmachung des Hinweises auf die Patenterteilung: **13.12.2006**
(21) Anmeldenummer: 00945593.2
(22) Anmeldetag: 30.05.2000
(51) Int. Cl.: H04M 3/22

(54) **ERDTASTENERFASSUNGSSCHALTUNG UND VERFAHREN ZUR STÖRSICHEREN ERFASSUNG DER BETÄTIGUNG EINER ERDTASTE BEI TELEPHONEN**
GROUND KEY DETECTION CIRCUIT AND METHOD FOR INTERFERENCE-RESISTANT DETECTION OF THE ACTIVATION OF A GROUND KEY FOR TELEPHONES
CIRCUIT DE DETECTION DE TOUCHE DE TERRE ET PROCEDE DE DETECTION INSENSIBLE AUX PARASITES DE L'ACTIONNEMENT D'UNE TOUCHE DE TERRE DE TELEPHONES

(30) Priorität: 07.06.1999 DE 19925886
(43) Veröffentlichungstag der Anmeldung: 06.03.2002
(73) Patentinhaber: Infineon Technologies AG, 81669 München (DE)
(72) Erfinder: NÖSSING, Gerhard, A-9500 Villach (AT)
(74) Vertreter: Reinhard - Skuhra - Weise & Partner
(86) Internationale Anmeldenummer: PCT/DE2000/001770
(87) Internationale Veröffentlichungsnummer: WO 2000/076197

(56) Entgegenhaltungen:
- US-A- 5 515 417
- US-A- 5 659 570
- PATENT ABSTRACTS OF JAPAN vol. 018, no. 084 (E-1506), 10. Februar 1994 (1994-02-10) & JP 05 292158 A (MURATA MACH LTD), 5. November 1993 (1993-11-05)

## Beschreibung

Die Erfindung betrifft eine Erdtastenerfassungsschaltung zur störsicheren Erfassung der Betätigung einer Erdtaste bei einem Telephon sowie ein entsprechendes Verfahren zur störsichern Erfassung der Betätigung einer Erdtaste bei Telephonen.

Ist bei einem Telephon ein Amtsgespräch aufgebaut worden, kann durch Betätigen der Erdtaste eine sogenannte Rückfrage eingeleitet werden. Die Amtsübertragung hält das bestehende Gespräch aufrecht und schaltet die Rückfragen der Nebenstelle auf eine Rückfrage-Teilnehmerschaltung. Von der Rückfrage-Teilnehmerschaltung kann ein Interngespräch aufgebaut werden. Über diesen Rückfrageweg kann das Amtsgespräch auf einen anderen Teilnehmer umgelegt bzw. diesem übergeben werden.

Der Telephonapparat ist bei digitalen Vermittlungssystemen an einen integrierten Halbleiterbaustein, der die sogenannten BORSCHT-Funktionen wahrnimmt, angeschlossen. Diese integrierte Halbleiterschaltung wird allgemein als SLIC-Schaltung (SLIC: subscriber line interface circuit) bezeichnet. Bei "BORSCHT" handelt es sich um ein Kunstwort zur leichteren Umschreibung der Funktionen einer Teilnehmerschaltung innerhalb einer Vermittelungsstelle. Das Wort "BORSCHT" setzt sich aus den Anfangsbuchstaben der englischen Bezeichnung für die verschiedenen Funktionen einer derartigen SLIC-Halbleiterschaltung zusammen. Diese Funktionen umfassen den Batteriebetrieb (battery feed), den Überspannungsschutz (overvolt protection), den Ruf des Teilnehmers (ringing), die Signalisierung (signalling), das Kodieren (coding), die Gabelschaltung (hybrid) und da Ermöglichen von Prüf-, Test- und Wartungszwecken (testing).

In dem US-Patent US 5 659 570 ist eine integrierte SLIC-Schaltung beschrieben, die einen Erdtastenerfassungsschaltkreis enthält. Die SLIC-Schaltung ist hierbei über zwei Telephonanschlußleitungen an den Telephonapparat mit Erdtaste angeschlossen, wobei die in der SLIC-Schaltung enthaltene Erdtastenerfassungschaltung bei Betätigung der Erdtaste an dem Telephonapparat ein Ungleichgewicht der an den beiden Anschlußleitungen fließenden Ströme zur Abgabe eines Erdtastenerfassungssignals erkennt. Die beiden an den Anschlüssen fließenden Ströme werden jeweils mit Referenzsströmen verglichen, die durch zwei Referenzstromquellen erzeugt werden. Die beiden durch die Referenzstromquellen erzeugten Referenzströme sind dabei gleich hoch. Falls der Strom auf der ersten Telephonapparatanschlußleitung I_{T} (T: tip) größer ist als die Summe des auf der zweiten Telephonapparatanschlußleitung fließenden Stromes I_{R} (R: ring) und dem von der ersten Referenzstromquelle erzeugten Referenzstrom oder falls der auf der zweiten Telephonanschlußleitung fließende Strom I_{R} größer ist als die Summe des auf der ersten Telephonanschlußleitung fließenden Stromes I_{T} und dem durch die zweite Referenzstromquelle erzeugten Referenzstromes, erkennt die Erdtastenerfassungsschaltung der integrierten SLIC-Schaltung eine Betätigung der Erdtaste des Telephonapparates und gibt ein Erdtastenerfassungssignal ab.

Damit Stromstörsignale auf den Telephonanschlußleitungen nicht zu falschen Erdtastenerfassungen führen, muß das Ungleichgewicht der auf den Telephonanschlußleitungen fließenden Ströme I_{T} und I_{R} für eine bestimmte Zeitdauer bestehen. Ein Ungleichgewicht der beiden in den Telephonanschlußleitungen fließenden Ströme wird auch als Longitudinalstrom bezeichnet. Sobald der Longitudinalstrom einen bestimmten Schwellenstrom für eine gewisse Schutzzeit überschreitet, wird bei derart herkömmlichen Erdtastenerfassungsschaltungen ein Erdtastenerfassungssignal abgegeben.

Bei Erdtastenerfassungsschaltungen nach dem Stand der Technik besteht doch ein Nachteil darin, daß sinusförmige Stromstörungen auf den Telephonanschlußleitungen, die kapazitiv auf die Leitungen eingekoppelt werden, dazu führen können, daß die Stromschwelle für eine kurze Zeitdauer wieder unterschritten wird, bevor die Schutzzeitdauer abgelaufen ist. Beträgt die Schutzzeit beispielsweise 4 ms und sinkt der erfaßte Longitudinalstrom vor Erreichen dieser Schutzzeit aufgrund eines überlagerten sinusförmigen Störstromes unter die Stromschwelle ab, bevor die Schutzzeit von 4 ms erreicht wird, so wird das Betätigen der Erdtaste nicht erfaßt, selbst wenn der Longitudinalstrom innerhalb kürzester Zeit nach Unterschreiten der Stromquelle diese wieder überschreitet. Die kapazitiv eingekoppelten sinusförmigen Störströme können durch das Betätigen der Erdtaste den hervorgerufenen Longitudinalstrom an den Wellentälern periodisch unterhalb des Schwellenwertes drücken, bevor jeweils die eingestellte Schutzzeit abgelaufen ist. In einem solchen Fall wird das Betätigen der Erdtaste nicht erkannt.

Eine ähnliche Schaltung ist aus US-A-5 515 417 bekannt.

Es ist daher die Aufgabe der vorliegenden Erfindung, eine Erdtastenerfassungsschaltung und ein entsprechendes Verfahren zum Erfassen der Erdtastenbetätigung bei Telephonen zu schaffen, die störsicher gegenüber eingekoppelten Störwechselströmen sind und die Betätigung einer Erdtaste auch bei Vorliegen von eingekoppelten Störwechselströmen sicher erfassen.

Diese Aufgabe wird erfindungsgemäß durch eine Erdtastenerfassungsschaltung mit den in Patentanspruch 1 angegebenen Merkmalen sowie durch ein Verfahren zum störsicheren Erfassen der Betätigung einer Erdtaste bei Telephonen mit den in Patentanspruch 15 angegebenen Merkmalen gelöst.

Weitere vorteilhafte Ausgestaltungen der erfindungsgemäßen Erdtastenerfassungsschaltung sowie des erfindungsgemäßen Verfahrens zum störsicheren Erfassen der Betätigung einer Erdtaste bei Telephonen sind in den Unteransprüchen angegeben.

Die Erfindung schafft eine Erdtastenerfassungsschaltung zur störsicheren Erfassung der Betätigung einer Erdtaste bei einem Telephon mit
einer Longitudinalstrom-Erfassungseinrichtung zur Erfassung eines bei Betätigung der Erdtaste fließenden Longitudinalstroms,
mindestens einem Komparator zum Vergleich des erfaßten Longitudinalstroms mit einem Schwellenwert,
einer Überwachungsschaltung zur Überwachung der Überschreitungs-Zeitdauer, für die der erfaßte Longitudinalstrom den Schwellenwert überschreitet und zur Erfassung einer Unterschreitungs-Zeitdauer, für die der Longitudinalstrom den Schwellenwert unterschreitet,
wobei die Überwachungsschaltung ein Erdtastenerfassungssignal abgibt, wenn die Uberschreitungs-Zeitdauer größer als die Unterschreitungs-Zeitdauer.

Bei einer bevorzugten Weiterbildung der erfindungsgemäßen Erdtastenerfassungsschaltung enthält diese einen ersten Komparator zum Vergleich des erfaßten Longitudinalstroms mit einem oberen Schwellenwert und
einen zweiten Komparator zum Vergleich des erfaßten Longitudinalstroms mit einem unteren Schwellenwert,
wobei die Überwachungseinrichtung die Uberschreitungs-Zeitdauer und die Unterschreitungs-Zeitdauer der beiden Schwellenwerte erfaßt und ein Erdtastenerfassungssignal abgibt, wenn die Uberschreitungs-Zeitdauer des Longitudinalstroms an dem ersten Komparator größer ist als die Unterschreitungs-Zeitdauer oder wenn
die Unterschreitungs-Zeitdauer des Longitudinalstroms an dem zweiten Komparator größer ist als die Uberschreitungs-Zeitdauer.

Dies bietet den besonderen Vorteil, daß die Betätigung der Erdtaste unabhängig von der Polarität des fließenden Longitudinalstroms sicher erfaßbar ist.

Bei einer weiteren vorteilhaften Ausgestaltung der erfindungsgemäßen Erdtastenerfassungsschaltung enthält die Überwachungsschaltung einen internen Vorwärts/Rückwärts-Zähler, der nach Überschreiten des oberen Schwellenwertes vorwärts zählt und nach Unterschreiten des oberen Schwellenwertes rückwärts zählt.

Dies bietet den besonderen Vorteil, daß die Zeiterfassung in einfacher Weise mit minimalem Schaltungsaufwand erfolgen kann.

Bei einer weiteren vorteilhaften Ausgestaltung der erfindungsgemäßen Erdtastenerfassungsschaltung enthält die überwachungsschaltung einen internen Vorwärts/Rückwärts-Zähler, der bei Unterschreiten des unteren Schwellenwertes vorwärts und bei Überschreiten des unteren Schwellenwertes rückwärts zählt.

Dies bietet den besonderen Vorteil, daß Betätigung der Erdtaste unabhängig des dadurch verursachten Longitudinalstroms in einfacher Weise mit minimalem Schaltungsaufwand erfaßbar ist.

Bei einer weiteren bevorzugten Ausführungsform der erfindungsgemäßen Erdtastenerfassungsschaltung führt der interne Zähler der Überwachungsschaltung den Vorwärts/Rückwärts-Zählvorgang für eine vorbestimmte einstellbare Zählzeitdauer nach Überschreiten des oberen Schwellenwertes oder nach Unterschreiten des unteren Schwellenwertes durch.

Dies bietet den besonderen Vorteil, daß die Erdtastenerfassungsschaltung an die Frequenzen bzw. Zeitperioden der zu erwartenden Wechselstromstörungssignale angepaßt werden kann.

Bei einer weiteren vorteilhaften Ausgestaltung der erfindungsgemäßen Erdtastenerfassungsschaltung ist die einstellbare Zählzeitdauer auf die halbe Zeitperiode eines zu erwartenden Störsignals eingestellt, das eine maximale Stör-Zeitperiode bzw. eine minimale Störfrequenz aufweist.

Dies bietet den besonderen Vorteil, daß nur die Frequenz eingestellt werden muß, die der Frequenz des zu erwartenden Störsignals, das eine minimale Störfrequenz aufweist, entspricht. Die übrigen Störsignale mit höheren Störfrequenzen werden automatisch mitunterdrückt und beeinflussen den Erfassungsvorgang der Erdtastenbetätigung bei der erfindungsgemäßen Erdtastenerfassungsschaltung nicht.

Bei einer weiteren vorteilhaften Ausgestaltung der erfindungsgemäßen Erdtastenerfassungsschaltung beträgt die einstellbare Zählzeitdauer der halben Zeitperiode von Störsignalen mit einer Störsignal-Frequenz von 16 2/3 Hz, 50 Hz, 60 Hz oder 120 Hz.

Bei einer Einstellung der einstellbaren Zählzeitdauer auf die halbe Zeitperiode eines sinusförmigen Störsignals mit einer minimalen Störfrequenz von 16 2/3 Hz hat dies den besonderen Vorteil, daß die übrigen Störsignale mit Störsignal-Frequenzen von 50 Hz, 60 Hz oder 120 Hz ebenfalls mitunterdrückt werden.

Bei einer weiteren vorteilhaften Ausgestaltung der erfindungsgemäßen Erdtastenerfassungsschaltung beträgt der obere Schwellenwert etwa +17 mA und der untere Schwellenwert etwa - 17 mA.

Bei einer weiteren vorteilhaften Ausgestaltung der erfindungsgemäßen Erdtastenerfassungsschaltung wird die Anzahl der Polaritätswechsel des Longitudinalstroms durch einen weiteren internen Zähler einer Polaritätserfassungseinrichtung innerhalb der Überwachungsschaltung gezählt und bei Überschreiten eines vorbestimmten einstellbaren Schwellen-Zählwertes ein Fremdwechselstrom-Erkennungssignal durch die Überwachungsschaltung abgegeben.

Dies bietet den besonderen Vorteil, daß das fehlerhafte Anlegen eines Fremdwechselstroms oder einer Fremdspannung auf einer der beiden Telephonanschlußleitungen sofort erkennbar ist.

Bei einer weiteren vorteilhaften Ausgestaltung der erfindungsgemäßen Erdtastenerfassungsschaltung wird das Erdtastenerfassungssignal erst nach Ablauf einer vorbestimmten einstellbaren Schutzzeit abgegeben.

Bei einer weiteren vorteilhaften Ausgestaltung der erfindungsgemäßen Erdtastenerfassungsschaltung beträgt die einstellbare Schutzzeit etwa 4 ms.

Dies bietet den Vorteil, daß kurzzeitige Störungen unterdrückt werden können und gleichzeitig eine Unterdrückung von Störungen mit Frequenzen bis 120 Hz möglich ist.

Bei einer weiteren vorteilhaften Ausgestaltung der erfindungsgemäßen Erdtastenerfassungsschaltung wird der Ablauf der Schutzzeit durch den internen Vorwärts/Rückwärts-Zähler der Überwachungsschaltung erfaßt.

Dies bietet den besonderen Vorteil, daß die Erfassung der Schutzzeit in einfacher Weise ohne zusätzlichen eigenen Zähler möglich ist.

Bei einer weiteren vorteilhaften Ausgestaltung der erfindungsgemäßen Erdtastenerfassungsschaltung ist die Longitudinalstromerfassungseinrichtung eine integrierte Schaltung für digitale Telephonvermittlung (SLIC).

Dies bietet den besonderen Vorteil, daß die Longitudinalstromerfassung mittels integrierter Standard-Halbleiterbausteine ermöglicht wird.

Eine bevorzugte Ausführungsform der erfindungsgemäßen Erdtastenerfassungsschaltung wird unter Bezugnahme auf die beigefügten Zeichnungen zur Erläuterung erfindungswesentlicher Merkmale beschrieben.

Fig. 1 zeigt ein Blockschaltbild der erfindungsgemäßen Erdtastenerfassungsschaltung.

Fig. 2 zeigt eine bevorzugte Ausführungsform der in Fig. 1 gezeigten Erdtastenerfassungsschaltung gemäß der Erfindung.

Fig. 3 zeigt in erstes Beispiel für den Signalverlauf eines erfaßten Longitudinalstroms und den zugehörigen Zählersignalverlauf zur Erläuterung der erfindungsgemäßen Erdtastenbetätigungserfassung.

Fig. 4 zeigt ein zweites Beispiel für den Signalverlauf eines Longitudinalstroms und des zugehörigen Zählersignalverlaufs zur Erläuterung der erfindungsgemäßen Erdtastenbetätigungserfassung.

Fig. 5 zeigt ein drittes Beispiel für einen Signalverlauf des Longitudinalstroms und des zugehörigen Zählersignalverlaufs zur Erläuterung der erfindungsgemäßen Erdtastenbetätigungserfassung.

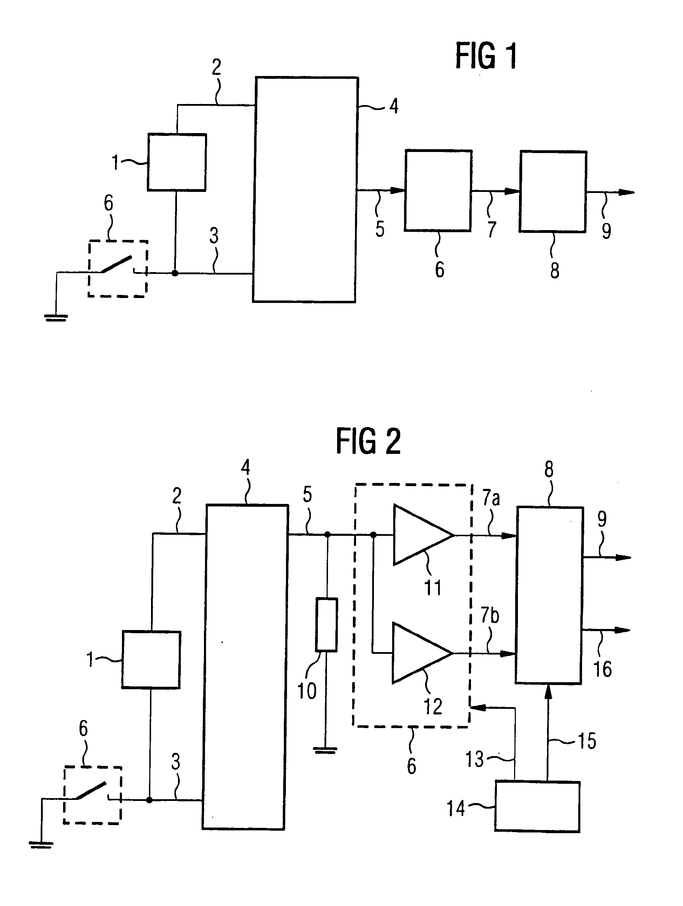

Fig. 1 zeigt den prinzipiellen Aufbau der erfindungsgemäßen Erdtastenerfassungsschaltung gemäß der Erfindung.

Ein Telephonapparat 1 ist über eine erste Telephonanschlußleitung 2 und über eine zweite Telephonanschlußleitung 3 an eine Longitudinalstromerfassungseinrichtung 4 angeschlossen. Die zweite Telephonanschlußleitung 3 enthält einen Abzweigungsknoten, an dem eine zu dem Telephonanschlußapparat 1 gehörende Erdtaste 6 angeschlossen ist und an Masse bzw. Erde anliegt. Die Longitudinalstromerfassungseinrichtung 4 ist vorzugsweise eine SLIC-Halbleiterschaltung mit integrierter Longitudinalstromerfassungsfunktion. Die Longitudinalstromerfassungseinrichtung 4 ist ausgangsseitig über eine Ausgangsleitung 5 mit einem Komparator 6 verbunden. Der über die Ausgangsleitung 5 abgegebene erfaßte Longitudinalstrom wird durch den Komparator 6 mit einem Wellen-Stromwert verglichen. Der Komparator 6 ist über einen Ausgangsleitung 7 an eine Überwachungsschaltung 8 angeschlossen. Die Überwachungsschaltung 8 erfaßt die Uberschreitungszeitdauer, d.h. diejenige Zeit, für die der Longitudinalstrom den eingestellten Strom-Schwellenwert überschreitet, und die Unterschreitungszeitdauer, d.h. diejenige Zeitdauer, in der der Longitudinalstrom den eingestellten Strom-Schwellenwert unterschreitet, und gibt über die Leitung 9 ein Erdtastenerfassungssignal ab, wenn die Überschreitungs-Zeitdauer länger dauert als die Unterschreitungs-Zeitdauer.

Fig. 2 zeigt eine bevorzugte Ausführungsform der in Fig. 1 dargestellten erfindungsgemäßen Erdtastenerfassungsschaltung. Gleiche Bezugszeichen bezeichnen dabei vergleichbare Bauteile.

Der durch die Longitudinalstromerfassungseinrichtung 4 erfaßte Longitudinalstrom wird über die Ausgangsleitung 5 mittels eines Stromspannungswandlers 10 in eine Meßspannung umgewandelt. Der Stromspannungswandler besteht, wie in Fig. 2 dargestellt, vorzugsweise aus einem gegen Masse geschalteten Widerstand. Die an dem Widerstand 10 anliegende Meßspannung, die den aufgetretenen Longitudinalstrom wiedergibt, wird an zwei Komparatorschaltkreise 11, 12 des Komparators angelegt. Die Eingänge der Komparatorschaltkreise 11, 12 sind mit der Ausgangsleitung 5 der Longitudinalstromerfassungsschaltung 4 verbunden. Die Komparatorschaltkreise 11, 12 des Komparators 6 vergleichen die in dem Widerstand 10 anliegende Spannung mit einstellbaren Schwellenwertspannungen.

Bei einer bevorzugten Ausführungsform sind die einstellbaren Schwellenwertspannungen der Komparatorschaltkreise 11, 12 über eine Einstelleitung 13 an eine Eingabeeinrichtung 14 angeschlossen. Durch die Eingabeeinrichtung 14 können hierbei die Schwellenwertspannungen an den Komparatorschaltkreisen 11, 12 bzw. die Schwellenwertströme eingestellt werden. Die Komparatorschaltkreise 11, 12 des Komparators 6 weisen Ausgangsleitungen 7a, 7b auf. Überschreitet der an der Ausgangsleitung 5 der Longitudinalstromerfassungseinrichtung 4 anliegende Longitudinalstrom an den Telephonanschlußleitungen 2, 3 des Telephonapparates 1 einen einstellbaren oberen Stromschwellenwert, gibt der Komparatorschaltkreis 11 über die Ausgangsleitung 7a ein entsprechendes Erfassungssignal an die Überwachungsschaltung 8 ab. Unterschreitet der an der Longitudinalstromerfassungseinrichtung 4 anliegende erfaßte Longitudinalstrom einen bestimmen einstellbaren unteren Stromschwellenwert, gibt der zweite Komparatorschaltkreis 12 über die Ausgangsleitung 7b ein entsprechendes Erfassungssignal an die Überwachungsschaltung 8 ab.

Die Überwachungseinrichtung 8 erfaßt die Überschreitungs-Zeitdauer sowie die Unterschreitungs-Zeitdauer und gibt ein Erdtastenerfassungssignal über die Ausgangsleitung 9 ab, wenn die Überschreitungs-Zeitdauer des an der Ausgangsleitung 5 abgegebenen Longitudinalstroms, die durch den ersten Komparatorschaltkreis 11 detektiert wird, größer ist als die Unterschreitungs-Zeitdauer des Longitudinalstroms, oder wenn die Unterschreitungs-Zeitdauer des Longitudinalstroms, die an dem zweiten Komparatorschaltkreis 12 detektiert wird, größer ist als die Überschreitungs-Zeitdauer.

Hierzu enthält die Überwachungsschaltung 8 einen internen Vorwärts/Rückwärts-Zähler, der nach Überschreiten des oberen Stromschwellenwertes vorwärts zählt und bei Unterschreiten des oberen Stromschwellenwertes rückwärts zählt. Die überwachungsschaltung 8 enthält ferner einen zweiten internen Vorwärts/Rückwärts-Zähler, der bei Unterschreiten des unteren Stromschwellenwertes vorwärts zählt und bei Überschreiten des oberen Stromschwellenwertes rückwärts zählt.

Die Überwachungsschaltung 8 ist vorzugsweise über Einstelleitungen 15 mit der Eingabeeinrichtung 14 verbunden. Die internen Zähler der Überwachungsschaltung 8 führen den Vorwärts/Rückwärts-Zählvorgang für eine vorbestimmte einstellbare Zählzeitdauer nach Überschreiten des oberen Schwellenwerts bzw. nach Unterschreiten des unteren Schwellenwerts durch. Die Zählzeitdauern der internen Zähler der Überwachungsschaltung 8 können über die Einstelleitung 15 mit Hilfe der Eingabeeinrichtung 14 entsprechenden Anforderungen der erfindungsgemäßen Erdtastenerfassungsschaltung eingestellt bzw. gesetzt werden.

Die Überwachungsschaltung 8 enthält zusätzlich eine Strom-Polaritäts-Erfassungseinrichtung, mit der die Polaritätswechsel des Longitudinalstroms erfaßt werden. Hierzu enthält die Strom-Polaritäts-Erfassungseinrichtung einen weiteren internen Zähler, der bei Überschreiten eines vorbestimmten Schwellen-Zählwertes ein Fremdwechselstrom-Erkennungssignal über die Ausgangsleitung 16 der Überwachugnsschaltung 8 abgibt. Wechselt die Polarität des erfaßten Longitudinalstroms ständig, hat dies seine Ursache darin, daß die Telephonanschlußleitungen 2, 3 des Telephonanschlusses 1 an einer Fremdwechselspannung versehentlich angeschlossen worden sind oder diese ungewollt berühren. Der interne Zähler der Strom-Polaritäts-Erfassungseinrichtung wird dabei innerhalb einer bestimmten Zeitdauer, die umgekehrt proportional zu der anliegenden Frequenz der Fremdspannung ist, auf einen Schwellenzielwert erhöht. Durch Messung dieser Zeitdauer, beispielsweise mittels eines internen Taktsignals, kann die Frequenz der an Anschlußleitungen 2, 3 anliegenden Fremdwechselspannung berechnet werden und über eine (nicht dargestellte) Anzeigeeinrichtung angezeigt werden.

Die Überwachungsschaltung enthält, wie bereits erwähnt, einen ersten internen Vorwärts/Rückwärts-Zähler, der nach Überschreiten des oberen einstellbaren Stromschwellenwertes vorwärts und nach Unterschreiten des einstellbaren oberen Stromschwellenwertes rückwärts zählt, sowie einen zweiten internen Vorwärts/Rückwärts-Zähler, der bei Unterschreiten des unteren Stromschwellenwertes vorwärts zählt und bei Überschreiten des unteren Stromschwellenwertes rückwärts zählt. Die Zeitdauer, für welche der Vorwärst/Rückwärts-Zählvorgang bei den beiden internen Zählern durchgeführt wird, wird vorzugsweise extern über die Eingabeeinrichtung 14 eingestellt.

Bei einer bevorzugten Ausführungsform wird die einstellbare Zählzeitdauer der internen Zähler auf die halbe Zeitperiode eines zu erwartenden sinusförmigen Wechselstrom-Störsignals eingestellt, das eine maximale Stör-Zeitperiode bzw. eine minimale Störfrequenz aufweist. Die minimale Störfrequenz des zu erwartenden Störsignals beträgt dabei 16 2/3 Hz, 50 Hz, 60 Hz oder 120 Hz. Dies sind die Stromspannungsfrequenzen des Bahnnetzes des europäischen Wechselstromnetzes oder des amerikanischen Wechselstromnetzes. Vorzugsweise wird die einstellbare Zählzeitdauer der internen Zähler auf die halbe Zeitperiode des Bahnnetzes eingestellt, das eine minimale Störfrequenz von 16 2/3 Hz aufweist, also auf 30 ms bei einer Zeitperiode von 60 ms. Hierbei werden die übrigen Störfrequenzen von 50 Hz, 60 Hz sowie 120 Hz automatisch mitunterdrückt. Bei einer bevorzugten Ausführungsform beträgt der an dem Komparator 6 einstellbare obere Stromschwellenwert +17 mA und der untere Stromschwellenwert -17 mA. Die beiden Schwellenwerte sind vorzugsweise bezüglich einem Null-Strom symmetrisch.

Das über die Erdtastenerfassungssignalleitung 9 abgegebene Erdtastenerfassungssignal wird vorzugsweise erst nach Ablauf einer vorbestimmten über eine Einstelleitung 15 einstellbaren Schutzzeit abgegeben. Diese Schutzzeit beträgt vorzugsweise etwa 4 ms. Der Ablauf der Schutzzeit wird innerhalb der Überwachungsschaltung 8 durch die internen Vorwärts/Rückwärts-Zähler erfaßt.

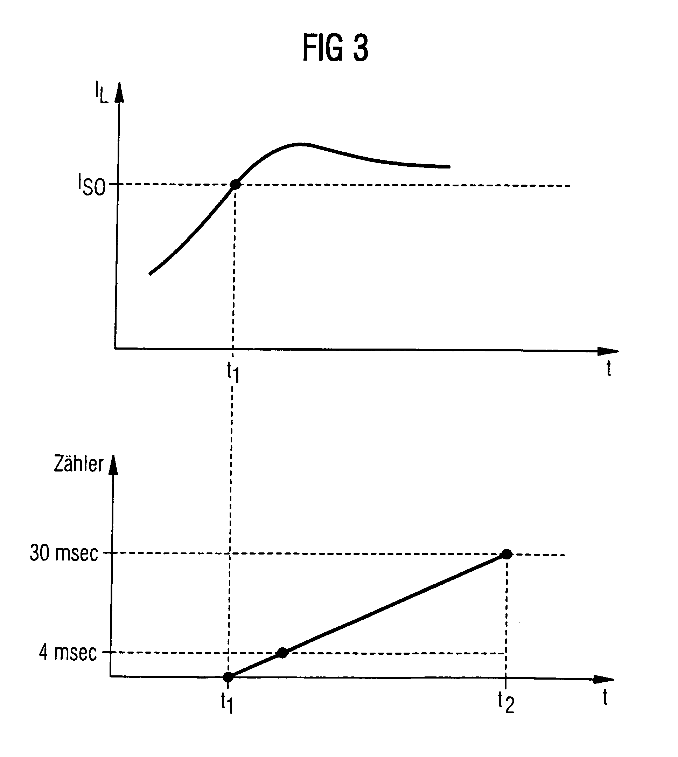

Die Funktionsweise der in Fig. 2 dargestellten bevorzugten Ausführungsform der erfindungsgemäßen Erdtastenerfassungsschaltung wird im weiteren mit Bezugnahme auf die Fig. 3 bis 5 für verschiedene Signalverläufe des erfaßten Longitudinalstroms I auf den Telephonanschlußleitungen 2, 3 erläutert.

Fig. 3 zeigt den Verlauf eines typischen Longitudinalstromes I an den Telephonanschlußleitungen 2, 3 sowie den Signalverlauf eines zugehörigen internen Zählers innerhalb der Überwachungsschaltung 8.

Nach Schließen der Erdtaste 6 entsteht an den Telephonapparat-Anschlußleitungen 2, 3 des Telephonanschlusses 1 ein störempfindlicher Longitudinalstrom, der durch die Longitudinalstromerfassungseinrichtung 4 erfaßt wird. Der an dem Ausgangsanschluß 5 erfaßte Longitudinalstrom beträgt die Differenz zwischen dem an der Anschlußleitung 2 und dem an der Anschlußleitung 3 fließenden Strom, geteilt durch einen Faktor 2. Durch das Schließen der Erdtaste 6 zeigt der Longitudinalstrom I_{L} bis zum Zeitpunkt T₁ an, bei dem er einen oberen Stromschwellenwert Iₛₒ überschreitet. Dieses Überschreiten wird mittels der ersten Komparatorschaltkreises 11 innerhalb des Komparators 6 erfaßt und ein Erfassungssignal über diese Signalleitung 7a an die Überwachungsschaltung 8 abgegeben.

Nach Erfassen des Schwellenwertüberschreitens durch den Longitudinalstrom I_{L} beginnt ein erster interner Zähler der Überwachungsschaltung 8 damit, vorwärtszuzählen, d.h. er wird ständig inkrementiert. Da in dem in Fig. 3 gezeigten Beispiel der Longitudinalstrom I_{L} ständig über dem oberen Stromschwellenwert Iₛₒ bleibt, zählt der interne Zähler ständig nach oben, bis zum Zeitpunkt T₂ die einstellbare Zählzeitdauer von 30 ms erreicht wird. Zu diesem Zeitpunkt T₂ wird durch die Überwachungsschaltung 8 die Betätigung der Erdtaste 6 erkannt und ein Erdtastenerfassungssignal über die Ausgangsleitungen 9 abgegeben.

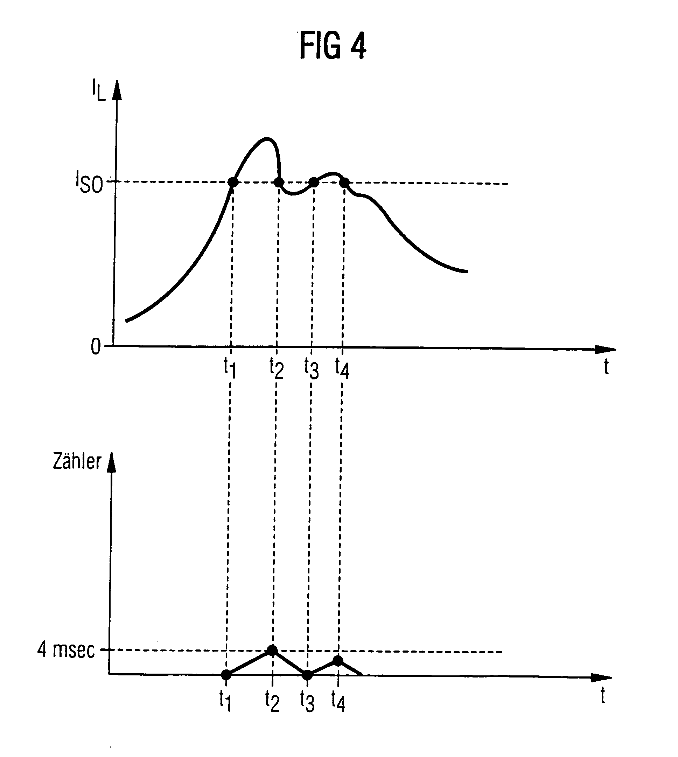

Fig. 4 zeigt einen weiteren beispielhaften Signalverlauf für den Longitudinalstrom I_{L}. Bei dem in Fig. 4 gezeigten Beispiel steigt der Longitudinalstrom I_{L} nach Schließen der Erdtaste 6 an und überschreitet zum Zeitpunkt T₁ den oberen Stromschwellenwert Iₛₒ. Jedoch wird der interne Zähler der Überwachungsschaltung 8 hochgezählt, bis der Longitudinalstrom I_{L} zum Zeitpunkt T₂ den oberen Schwellenwert wieder unterschreitet. Der interne Zähler ist als Vorwärts/Rückwärts-Zähler ausgebildet und wird nach Unterschreiten des oberen Schwellenwertes wieder rückwärtsgezählt bzw. inkrementiert. Zum Zeitpunkt T₃ überschreitet der Longitudinalstrom I_{L} wiederum den oberen Schwellenwert Iₛₒ und der interne Zähler zählt wieder vorwärts, bis zum Zeitpunkt T₄ der Longitudinalstrom wiederum den oberen Schwellenwert unterschreitet. Danach wird in dem gezeigten Beispiel der interne Zähler wieder auf Null heruntergezählt, da der Longitudinalstrom stets unterhalb des oberen Schwellenwertes bleibt.

Bei einer bevorzugten Ausführungsform der erfindungsgemäßen Erdtastenerfassungsschaltung ist zusätzlich über die Einstelleitung 15 eine vorbestimmte Schutzzeit in der Überwachungsschaltung 8 eingebbar. In dem in Fig. 4 gezeigten Beispiel beträgt die Schutzzeit 4 ms. Da der interne Zähler bei dem in Fig. 4 gezeigten Beispiel an keiner Stelle die Schutzzeit von 4 ms überschreitet, wird kein Erdtastenerfassungssignal abgegeben.

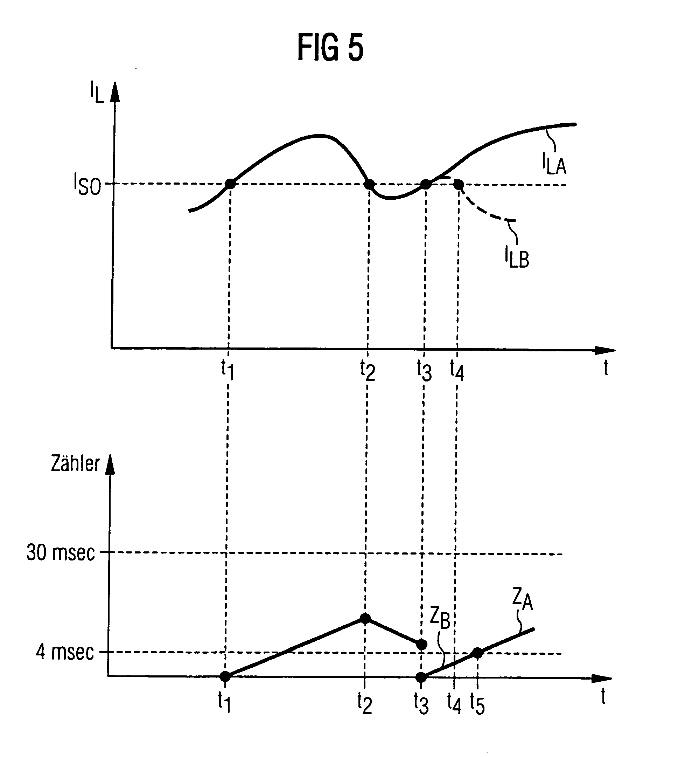

Fig. 5 zeigt beispielhaft den Signalverlauf des Longitudinalstroms I_{L} und den zugehörigen Signalverlauf des innerhalb der Überwachungsschaltung 8 untergebrachten internen Zählers.

Bei dem in Fig. 5 gezeigten Beispiel überschreitet der Longitudinalstrom I_{L} zum Zeitpunkt T₁ den oberen Schwellenwert Iₛₒ, wodurch der interne Zähler hochgezählt wird. Zum Zeitpunkt T₂ unterschreitet der Longitudinalstrom den oberen Schwellenwert und die Zählrichtung des internen Zählers wird umgekehrt und er wird bis zum Zeitpunkt T₃ dekrementiert. Zum Zeitpunkt T₃ überschreitet der Longitudinalstrom wiederum den oberen Schwellenwert, wobei er bei der ersten gezeigten Signalverlaufvariante I_{LA} oberhalb des oberen Stromschwellenwertes verbleibt, und bei der zweiten dargestellten Variante I_{LB} wiederum zum Zeitpunkt T₄ den oberen Stromschwellenwert unterschreitet.

Wie man aus Fig. 5 erkennen kann, wird zum Zeitpunkt T₂, wenn die obere Stromschwelle wieder unterschritten wird, der Zähler abwärtsgezählt, und zum Zeitpunkt T₃, bei der Longitudinalstrom den oberen Schwellenwert wieder überschreitet, geprüft, ob der Zähler den Zählwert größer Null besitzt, und dies abgespeichert. Der Zähler wird bei Überschreiten des oberen Stromschwellenwertes zurückgesetzt und beginnt zum Zeitpunkt T₃ wieder mit dem Hochzuzählen.

Bei der in Fig. 5 gezeigten zweiten Variante (I_{LB}) wird der Zähler nach Unterschreiten des oberen Stromschwellenwertes zum Zeitpunkt T₄ wieder auf Null zurückgestellt. Erst nach nochmaligem Durchlaufen der einstellbaren minimalen Schutzzeit zum Zeitpunkt T₅ wird bei der ersten in Fig. 5 dargestellten Signalverlaufvariante des Longitudinalstroms I_{L} (I_{LA}) ein Erdtastenerfassungssignal über die Erdtastenerfassungssignalleitung 9 abgegeben. Umgekehrt wird bei der zweiten in Fig. 5 dargestellten Signalverlaufvariante I_{LB}, bei der der Zähler Z_{B} vor Erreichen der Schutzzeit von 4 ms wieder rückwärtsgezählt wird, kein Erdtastenerfassungssignal erzeugt.

Das Erdtastenerfassungssignal kann vorzugsweise durch Setzen eines Erdtastenerfassungs-Bits bzw. Erdtastenerfassungs-Flags folgen. Das gesetzte Erdtastenerfassungs-Flag bzw. Erdtastenerfassungs-Bit löst beispielsweise eine maskierbare Interruptprozedur bei der übergeordneten Firmware aus.

Wie man aus dem in Fig. 4 gezeigten Signalverlaufsbeispiel erkennen kann, wird, wenn die Überschreitungs-Zeitdauer, mit welcher der Longitudinalstrom den oberen Stromschwellenwert Iₛₒ überschreitet (Zeitdauer zwischen Zeitpunkt T₁ und T₂), größer ist als die Unterschreitungs-Zeitdauer, mit der der Longitudinalstrom I_{L} den oberen Stromschwellenwert Iₛₒ unterschreitet (Zeitdauer zwischen dem Zeitpunkt T₂ und T₃), kein Erdtastenerfassungssignal abgegeben, weil die einstellbare Schutzzeit von 4 ms noch nicht abgelaufen ist.

Durch die erfindungsgemäße Erdtastenerfassungseinrichtung ist daher möglich, sowohl sinusförmige Störströme bei der Erdtastenerfassung zu unterdrücken, als auch eine Schutzzeit beizubehalten.

Ferner können an den Anschlußleitungen anliegende Fremdspannungen erkannt und deren Frequenz angezeigt werden.

Neben der Störsicherheit gegenüber sinusförmigen Stromeinkopplungen gewährleistet die erfindungsgemäße Erdtastenschutzeinrichtung auch Schutz gegenüber Signalschwankungen aufgrund von Schalterprellen oder aufgrund von Einschwingvorgängen.

## Patentansprüche

1. Erdtastenerfassungsschaltung zur störsicheren Erfassung der Betätigung einer Erdtaste bei einem Telephon mit:
einer Longitudinalstromerfassungseinrichtung (4) zur Erfassung eines bei der Betätigung der Erdtaste (6) fließenden Longitudinalstroms,
einem Komparator (6) zum Vergleich des erfaßten Longitudinalstroms mit mindestens einem Schwellenwert,
einer Überwachungsschaltung (8) zur Erfassung einer Überschreitungs-Zeitdauer, mit der der Longitudinalstrom den Stromschwellenwert überschreitet, und zur Erfassung einer Unterschreitungs-Zeitdauer, mit der der Longitudinalstrom den Stromschwellenwert unterschreitet, wobei die Überwachungsschaltung (8) ein Erdtastenerfassungssignal abgibt, wenn die Überschreitungs-Zeitdauer größer ist als die Unterschreitungs-Zeitdauer.

2. Erdtastenerfassungsschaltung zur störsicheren Erfassung der Betätigung einer Erdtaste nach Anspruch 1, **dadurch gekennzeichnet, daß** der Komparator (6) einen ersten Komparatorschaltkreis (11) und einen zweiten Komparatorschaltkreis (12) aufweist, wobei der erste Komparatorschaltkreis (11) zum Vergleich des erfaßten Longitudinalstroms mit einem oberen Stromschwellenwert und der zweite Komparatorschaltkreis (12) zum Vergleich des erfaßten Longitudinalstroms mit einem unteren Stromschwellenwert vorgesehen ist, und daß
die Überwachungsschaltung (8) die Überschreitungs-Zeitdauer und die Unterschreitungs-Zeitdauer der beiden Stromschwellenwerte erfaßt und ein Erdtastenerfassungssignal abgibt, wenn die Überschreitungs-Zeitdauer des Longitudinalstroms an dem ersten Komparatorschaltkreis (11) größer ist als die Unterschreitungs-Zeitdauer, oder
wenn die Unterschreitungs-Zeitdauer des Longitudinalstroms an dem zweiten Komparatorschaltkreis (12) größer ist als die Überschreitungs-Zeitdauer.

3. Erdtastenerfassungsschaltung nach Anspruch 1 oder 2,
**dadurch gekennzeichnet, daß** die Überwachungsschaltung (8) mindestens einen internen Vorwärts/Rückwärst-Zähler enthält, der nach Überschreiten des oberen Stromschwellenwertes vorwärts zählt und nach Unterschreiten des oberen Stromschwellenwertes rückwärts zählt.

4. Erdtastenerfassungsschaltung nach einem der Ansprüche 1 bis 3, **dadurch gekennzeichnet, daß** die Überwachungsschaltung (8) einen internen Vorwärts/Rückwärts-Zähler enthält, der nach Unterschreiten des unteren Stromschwellenwertes vorwärts zählt und nach Überschreiten des unteren Stromschwellenwertes rückwärts zählt.

5. Erdtastenerfassungsschaltung nach Anspruch 3 oder 4,
**dadurch gekennzeichnet, daß** die internen Zähler den Vorwärts/Rückwärts-Zählvorgang für eine vorbestimmte einstellbare Zählzeitdauer nach dem Über/Unterschreiten der Schwellenwerte durchführen.

6. Erdtastenerfassungsschaltung nach Anspruch 5,
**dadurch gekennzeichnet, daß** die einstellbare Zählzeitdauer der halben Zeitperiode eines Störsignals entspricht, das eine maximale Stör-Zeitperiode bzw. minimale Störfrequenz aufweist.

7. Erdtastenerfassungsschaltung nach Anspruch 6,
**dadurch gekennzeichnet, daß** die minimale Störfrequenz des Störsignals 16 2/3 Hz, 50 Hz, 60 Hz oder 120 Hz beträgt.

8. Erdtastenerfassungsschaltung nach einem der vorangehenden Ansprüche, **dadurch gekennzeichnet, daß** der obere Stromschwellenwert etwa +17 mA und der unteren Stromschwellenwert etwa -17 mA beträgt.

9. Erdtastenerfassungsschaltung nach Anspruch 1 bis 8,
**dadurch gekennzeichnet, daß** die Überwachungsschaltung (8) eine Strom-Polaritätserfassungseinrichtung zur Erfassung der Polarität des Longitudinalstroms enthält.

10. Erdtastenerfassungsschaltung nach Anspruch 9,
**dadurch gekennzeichnet, daß** die Anzahl der Polaritätswechsel des Longitudinalstroms durch einen internen Zähler der Strom-Polaritätserfassungseinrichtung gezählt werden und bei Überschreiten eines vorbestimmten einstellbaren Schwellen-Zählwertes ein Fremd-Wechselstrom-Erkennungssignal durch die Strom-Polaritätserfassungseinrichtung abgegeben wird.

11. Erdtastenerfassungsschaltung nach Anspruch 1 bis 10,
**dadurch gekennzeichnet, daß** das Erdtastenerfassungssignal erst nach Ablauf einer vorbestimmten einstellbaren Schutzzeit abgebbar ist.

12. Erdtastenerfassungsschaltung nach Anspruch 11,
**dadurch gekennzeichnet, daß** die einstellbare Schutzzeit etwa 4 ms beträgt.

13. Erdtastenerfassungsschaltung nach Anspruch 11 oder 12,
**dadurch gekennzeichnet, daß** der Ablauf der einstellbaren Schutzzeit durch die internen Vorwärts/Rückwärts-Zähler der Überwachungsschaltung (8) erfaßt wird.

14. Erdtastenerfassungsschaltung nach Anspruch 1 bis 13,
**dadurch gekennzeichnet, daß** die Longitudinalstromerfassungseinrichtung (4) eine integrierte Schaltung für die digitale Telephonvermittlung (SLIC) ist.

15. Verfahren zum störsicheren Erfassen der Betätigung einer Erdtaste bei einem Telephon mit den folgenden Schritten:
(a) Erfassen eines bei der Betätigung der Erdtaste (6) fließenden Longitudinalstroms;
(b) Vergleichen des erfaßten Longitudinalstroms mit einem Stromschwellenwert;
(c) Erfassen einer Überschreitungs-Zeitdauer, für deren Dauer der Longitudinalstrom den Stromschwellenwert überschreitet, und eine Unterschreitungs-Zeitdauer, für deren Dauer der Longitudinalstrom den Stromschwellenwert unterschreitet;
(d) Abgeben eines Erdtastenerfassungssignals, wenn die Uberschreitungs-Zeitdauer größer ist als die Unterschreitungs-Zeitdauer.

16. Verfahren nach Anspruch 15, **dadurch gekennzeichnet, daß** das Erdtastenerfassungssignal abgegeben wird, wenn die Überschreitungs-Zeitdauer größer ist als die Unterschreitungs-Zeitdauer und zusätzlich eine einstellbare Schutzzeit abgelaufen ist.

## Claims

1. Grounding key detection circuit for interference-proof detection of the operation of a grounding key in a telephone comprising:
a longitudinal current detection device (4) for detecting a longitudinal current flowing when the grounding key (6) is operated,
a comparator (6) for comparing the detected longitudinal current with at least one threshold value,
a monitoring circuit (8) for detecting an overshoot period for which the longitudinal current exceeds the current threshold value and for detecting an undershoot period for which the longitudinal current drops below the current threshold value, the monitoring circuit (8) outputting a grounding key detection signal when the overshoot period is greater than the undershoot period.

2. Grounding key detection circuit for interference-proof detection of the operation of a grounding key according to Claim 1, **characterized in that** the comparator (6) has a first comparator circuit (11) and a second comparator circuit (12), the first comparator circuit (11) being provided for comparing the detected longitudinal current with an upper current threshold value and the second comparator circuit (12) being provided for comparing the detected longitudinal current with a lower current threshold value, and **in that** the monitoring circuit (8) detects the overshoot period and the undershoot period of the two current threshold values and outputs a grounding key detection signal when the overshoot period of the longitudinal current at the first comparator circuit (1) is greater than the undershoot period, or when the undershoot period of the longitudinal current at the second comparator circuit (12) is greater than the overshoot period.

3. Grounding key detection circuit according to Claim 1 or 2, **characterized in that** the monitoring circuit (8) contains at least one internal up/down counter which counts up after the upper current threshold value has been exceeded and counts down after the lower current threshold value has been undershot.

4. Grounding key detection circuit according to one of Claims 1 to 3, **characterized in that** the monitoring circuit (8) contains an internal up/down counter which counts up after the lower current threshold value has been undershot and counts down after the lower current threshold value has been exceeded.

5. Grounding key detection circuit according to Claim 3 or 4, **characterized in that** the internal counters perform the up/down counting processes for a predetermined adjustable counting period after the threshold values have been exceeded/undershot.

6. Grounding key detection circuit according to Claim 5, **characterized in that** the adjustable counting period corresponds to half the period of an interference signal which has a maximum interference period and/or minimum interference frequency, respectively.

7. Grounding key detection circuit according to Claim 6, **characterized in that** the minimum interference frequency of the interference signal is 16 2/3 Hz, 50 Hz, 60 Hz or 120 Hz.

8. Grounding key detection circuit according to one of the preceding claims, **characterized in that** the upper current threshold value is about +17 mA and the lower current threshold value is about -17 mA.

9. Grounding key detection circuit according to Claim 1 to 8, **characterized in that** the monitoring circuit (8) contains a current polarity detection device for detecting the polarity of the longitudinal current.

10. Grounding key detection circuit according to Claim 9, **characterized in that** the number of polarity changes of the longitudinal current is counted by an internal counter of the current polarity detection device and, when a predetermined adjustable threshold count is exceeded, an external alternating current detection signal is output by the current polarity detection device.

11. Grounding key detection circuit according to Claim 1 to 10, **characterized in that** the grounding key detection signal can only be output after a predetermined adjustable guard period has elapsed.

12. Grounding key detection circuit according to Claim 11, **characterized in that** the adjustable guard period is about 4 ms.

13. Grounding key detection circuit according to Claim 11 or 12, **characterized in that** the expiry of the adjustable guard period is detected by the internal up/down counters of the monitoring circuit (8).

14. Grounding key detection circuit according to Claim 1 to 13, **characterized in that** the longitudinal current detection device (4) is an integrated circuit for digital telephone switching (SLIC).

15. Method for the interference-proof detection of the operation of a grounding key in a telephone, comprising the following steps:
(a) detecting a longitudinal current flowing when the grounding key (6) is operated;
(b) comparing the detected longitudinal current with a current threshold value;
(c) detecting an overshoot period, for the duration of which the longitudinal current exceeds the current threshold value, and an undershoot period, for the duration of which the longitudinal current drops below the current threshold value;
(d) outputting a grounding key detection signal when the overshoot period is greater than the undershoot period.

16. Method according to Claim 15, **characterized in that** the grounding key detection signal is output when the overshoot period is greater than the undershoot period and additionally an adjustable guard period has elapsed.

## Revendications

1. Circuit de détection de touche de terre destiné à la détection antiparasitée de l'actionnement d'une touche de terre sur un téléphone comprenant :
un dispositif de détection de courant longitudinal (4) destiné à détecter un courant longitudinal qui circule lors de l'actionnement de la touche de terre (6),
un comparateur (6) pour comparer le courant longitudinal détecté avec au moins une valeur de seuil,
un circuit de surveillance (8) pour détecter une durée de supériorité pendant laquelle le courant longitudinal est supérieur à la valeur de seuil du courant et pour détecter une durée d'infériorité pendant laquelle le courant longitudinal est inférieur à la valeur de seuil du courant, le circuit de surveillance (8) délivrant un signal de détection de touche de terre lorsque la durée de supériorité est supérieure à la durée d'infériorité.

2. Circuit de détection de touche de terre destiné à la détection antiparasitée de l'actionnement d'une touche de terre selon la revendication 1, **caractérisé en ce que** le comparateur (6) présente un premier circuit comparateur (11) et un deuxième circuit comparateur (12), le premier circuit comparateur (11) étant prévu pour la comparaison du courant longitudinal détecté avec une valeur de seuil de courant supérieure et le deuxième circuit comparateur (12) pour la comparaison du courant longitudinal détecté avec une valeur de seuil de courant inférieure et **en ce que** le circuit de surveillance (8) détecte la durée de supériorité et la durée d'infériorité des deux valeurs de seuil de courant et délivre un signal de détection de touche de terre lorsque la durée de supériorité du courant longitudinal au niveau du premier circuit comparateur (11) est supérieure à la durée d'infériorité ou lorsque la durée d'infériorité du courant longitudinal au niveau du deuxième circuit comparateur (12) est supérieure à la durée de supériorité.

3. Circuit de détection de touche de terre selon la revendication 1 ou 2, **caractérisé en ce que** le circuit de surveillance (8) contient au moins un compteur/décompteur interne qui compte après un dépassement de la valeur de seuil supérieure du courant et décompte après un franchissement vers le bas de la valeur de seuil supérieure du courant.

4. Circuit de détection de touche de terre selon l'une des revendications 1 à 3, **caractérisé en ce que** le circuit de surveillance (8) contient au moins un compteur/décompteur interne qui compte après un franchissement vers le bas de la valeur de seuil inférieure du courant et décompte après un dépassement de la valeur de seuil inférieure du courant.

5. Circuit de détection de touche de terre selon la revendication 3 ou 4, **caractérisé en ce que** les compteurs internes effectuent le comptage/décomptage pendant une durée réglable prédéfinie après le franchissement vers le haut/bas des valeurs de seuil.

6. Circuit de détection de touche de terre selon la revendication 5, **caractérisé en ce que** la durée réglée correspond à la moitié de la période d'un signal parasite qui présente une période de perturbation maximale ou une fréquence de perturbation minimale.

7. Circuit de détection de touche de terre selon la revendication 6, **caractérisé en ce que** la fréquence de perturbation minimale du signal parasite est de 16 2/3 Hz, 50 Hz, 60 Hz ou 120 Hz.

8. Circuit de détection de touche de terre selon l'une des revendications précédentes, **caractérisé en ce que** la valeur de seuil de courant supérieure est d'environ +17 mA et la valeur de seuil de courant inférieure est d'environ -17 mA.

9. Circuit de détection de touche de terre selon l'une des revendications 1 à 8, **caractérisé en ce que** le circuit de surveillance (8) comprend un dispositif de détection de polarité du courant destiné à détecter la polarité du courant longitudinal.

10. Circuit de détection de touche de terre selon la revendication 9, **caractérisé en ce que** le nombre de changements de polarité du courant longitudinal est compté par un compteur interne du dispositif de détection de polarité du courant et un signal de détection de courant alternatif étranger est émis par le dispositif de détection de polarité du courant en cas de dépassement d'une valeur comptée de seuil réglable prédéfinie.

11. Circuit de détection de touche de terre selon l'une des revendications 1 à 10, **caractérisé en ce que** le signal de détection de touche de terre ne peut être délivré qu'après l'écoulement d'un temps de protection réglable prédéfini.

12. Circuit de détection de touche de terre selon la revendication 11, **caractérisé en ce que** le temps de protection réglable est d'environ 4 ms.

13. Circuit de détection de touche de terre selon la revendication 11 ou 12, **caractérisé en ce que** l'écoulement du temps de protection réglable est détecté par les compteurs/décompteurs internes du circuit de surveillance (8).

14. Circuit de détection de touche de terre selon l'une des revendications 1 à 13, **caractérisé en ce que** le dispositif de détection de courant longitudinal (4) est un circuit intégré pour la téléphonie numérique (SLIC).

15. Procédé de détection antiparasitée de l'actionnement d'une touche de terre sur un téléphone comprenant les étapes suivantes :
(a) Détection d'un courant longitudinal qui circule lors de l'actionnement de la touche de terre (6) ;
(b) Comparaison du courant longitudinal détecté avec une valeur de seuil du courant ;
(c) Détection d'une durée de supériorité pendant laquelle le courant longitudinal est supérieur à la valeur de seuil du courant et d'une durée d'infériorité pendant laquelle le courant longitudinal est inférieur à la valeur de seuil du courant ;
(d) Délivrance d'un signal de détection de touche de terre lorsque la durée de supériorité est supérieure à la durée d'infériorité.

16. Procédé selon la revendication 15, **caractérisé en ce que** le signal de détection de touche de terre est délivré lorsque la durée de supériorité est supérieure à la durée d'infériorité et qu'en plus un temps de protection réglable s'est écoulé.
